# EUROPÄISCHE PATENTSCHRIFT

(11) **EP 1 861 446 B1**
(45) Veröffentlichungstag und Bekanntmachung des Hinweises auf die Patenterteilung: **23.07.2008**
(21) Anmeldenummer: 06725102.5
(22) Anmeldetag: 16.03.2006
(51) Int. Cl.: C08G 18/42, C08G 18/10

(54) **POLYURETHANSCHUHSOHLEN**
POLYURETHANE SHOE SOLES
SEMELLES EN POLYURETHANE

(30) Priorität: 17.03.2005 IT MI20050439
(43) Veröffentlichungstag der Anmeldung: 05.12.2007
(73) Patentinhaber: BASF SE, 67056 Ludwigshafen (DE)
(72) Erfinder: SCHÜTTE, Markus, 49080 Osnabrück (DE); ORTALDA, Marco, I-10137 Torino (IT)
(86) Internationale Anmeldenummer: PCT/EP2006/060790
(87) Internationale Veröffentlichungsnummer: WO 2006/097507

(56) Entgegenhaltungen:
- WO-A-02/081537
- US-A- 4 639 471
- US-A- 5 470 935

## Beschreibung

Die Erfindung betrifft Polyurethanschuhsohlen sowie ein Verfahren zu deren Herstellung und die Verwendung von 2-Methyl-1,3-Propandiol zur Herstellung von Polyurethanschuhsohlen.

Polyurethanschuhsohlen sind allgemein bekannt, siehe beispielsweise Günter Oertel: "Kunststoffhanduch, Polyurethane", 2. Auflage, 1983, Kapitel 7.3.4.2.

Die im Fachgebiet bekannten Schuhsohlen aus Polyurethan haben häufig den Nachteil, dass sich mechanische Eigenschaften nach Herstellung der Sohlen verschlechtern, so verschlechtert sich zum Beispiel die Härte der Schuhsohlen und die Zugfestigkeit der Schuhsohlen oft unerwünscht.

Aufgabe der Erfindung war es, Polyurethanschuhsohlen bereit zu stellen, die nach der Umsetzung von Isocyanatkomponente mit Polyolkomponente eine möglichst geringe Veränderung in den mechanischen Eigenschaften, beispielsweise eine möglichst geringe Veränderung in der Härte und in der Zugfestigkeit aufweisen. Ferner war es Aufgabe der Erfindung, eine Polyurethanschuhsohle, insbesondere eine Polyurethanaußensohle bereit zu stellen, die einen geringen Abrieb aufweist.

Die Aufgabe konnte unerwartet dadurch gelöst werden, dass ein spezielles Polyesterol zur Herstellung der Polyurethanschuhsohlen verwendet wurde.

Gegenstand der Erfindung sind daher Polyurethanschuhsohlen, erhältlich durch Umsetzung von Diphenylmethandiisocyanaten mit Polyesterolen, wobei die Polyesterole erhältlich sind durch Umsetzung von Dicarbonsäuren mit 1,4-Butandiol und 2-Methyl-1,3-Propandiol.

Bei den erfindungsgemäßen Schuhsohlen handelt es sich im allgemeinen um Polyurethanenintegralschaumstoffe gemäß DIN 7726. In einer bevorzugten Ausführungsform betrifft die Erfindung Schuhsohlen auf Basis von Polyurethanschaumstoffen mit einer Shore Härte im Bereich von 20-80 A, bevorzugt von 30 bis 60 Shore A, gemessen nach DIN 53505. Weiterhin weisen die erfindungsgemäßen Schuhsohlen bevorzugt eine Zugfestigkeiten von 2 bis 20 N/mm², bevorzugt von 4 bis 10 N/mm², gemessen nach DIN 53504 auf. Ferner weisen die erfindungsgemäßen Schuhsohlen bevorzugt eine Dehnung von 200 bis 800 %, bevorzugt von 300 bis 700, gemessen nach DIN 53504 auf. Schließlich weisen die erfindungsgemäßen Integralschaumstoffe bevorzugt eine Weiterreißfestigkeit von 2 bis 45 N/mm, bevorzugt von 4 bis 38 N/mm, gemessen nach DIN 53507, auf.

Die zur Herstellung der erfindungsgemäßen Schuhsohlen verwendeten Diphenylmethandiisocyanate (a) können in den üblichen Isomerenverteilungen vorliegen. Bevorzugt wird 4,4'-Diphenylmethandiisocyanat (= 4,4'-MDI) verwendet. Das bevorzugt verwendete 4,4'-MDI kann geringe Mengen, bis etwa 10 Gew.-%, allophanat- oder uretoniminmodifizierte Polyisocyanate enthalten. Es können auch geringe Mengen Polyphenylenpolymethylenpolyisocyanat (Roh-MDI) eingesetzt werden. Die Gesamtmenge dieser hochfunktionellen Polyisocyanate sollte 5 Gew.-% des eingesetzten Isocyanates nicht überschreiten. Besonders bevorzugt wird nur 4,4'-MDI als Isocyanateinsatzstoff verwendet.

Die Diphenylmethandiisocyanate (a) können als solche oder bevorzugt in Form von Diphenylmethandiisocyanatprepolymeren eingesetzt werden. Diphenylmethandiisocyanatprepolymere sind im Stand der Technik bekannt. Die Herstellung erfolgt im allgemeinen durch Umsetzung von Diphenylmethandiisocyanat (a) mit Polyesterolen (b). Die Umsetzung erfolgt üblicherweise bei 20 bis 100°C, bevorzugt bei 60 bis 90°C, beispielsweise bei Temperaturen von etwa 80°C.

Bei der Herstellung der Prepolymere werden die nachstehend beschriebenen Komponenten (b-1), (b-2) oder Gemische daraus als Polyesterpolyole verwendet. Es ist bevorzugt, dass zur Herstellung der Prepolymere nur die Komponente (b-2) als Polyesterol verwendet wird, nicht aber die Komponente (b-1). Das Polyesterol-Diphenylmethandiisocyanat-Verhältnis wird bei der Herstellung der Prepolymeren im allgemeinen so gewählt, dass der NCO-Gehalt des resultierenden Prepolymeren 10 bis 25 Gew.-%, vorzugsweise 12 bis 24 Gew.-%, besonders bevorzugt 15 bis 23 Gew.-% beträgt.

Die Komponente (a), welche Diphenylmethandiisocyanate und/oder Diphenylmethandiisocyanatprepolymere umfasst, wird allgemein als Isocyanatkomponete bezeichnet. Zum Erhalt der erfindungsgemäßen Schuhsohlen wird die Isocyanatkomponente mit einer sogenannten "Polyolkomponente" umgesetzt. In einer bevorzugten Ausführungsform wird ein Diphenylmethandiisocyanatprepolymer, erhältlich durch Umsetzung von 4,4'-MDI mit einer Polyesterolkomponente (b-2), mit einer Polyolkomponente, enthaltend die Polyesterole (b-1), zur Reaktion gebracht.

Die Polyolkomponente enthält Polyesterole (b). Es ist erfindungswesentlich, dass die zumindest ein Teil Polyesterpolyole (b) erhältlich sind durch Umsetzung von Dicarbonsäuren mit 1,4-Butandiol und 2-Methyl-1,3-Propandiol. Diese erfindungswesentlichen Polyesterole werden als Bestandteil (b-1) bezeichnet. Die im Rahmen dieser Erfindung verwendeten Polyesterole (b) können jedoch neben dem erfindungswesentlichen Polyesterpolyolen (b-1) auch noch weitere, im Fachgebiet übliche, Polyesterole (b-2) enthalten.

In einer bevorzugten Ausführungsform enthält die Polyolkomponente (b) 20 bis 100 Gew.-%, besonders bevorzugt 60 bis 100 Gew.-%, insbesondere 80 bis 100 Gew.-% an dem Bestandteil (b-1), bezogen auf das Gesamtgewicht der Komponente (b).

Ferner kann die Polyolkomponente neben den Polyesterolen (b) gegebenenfalls auch noch Kettenverlängerungsmittel (c) und Treibmittel (d) enthalten.

Als Polyesterbestandteil (b-2) sind im allgemeinen die im Stand der Technik für die Polyurethanherstellung bekannten Polyesterole geeignet. Die Polyesterpolyole (b-2) können beispielsweise aus organischen Dicarbonsäuren mit 2 bis 12 Kohlenstoffatomen, vorzugsweise aromatischen Dicarbonsäuren mit 8 bis 12 Kohlenstoffatomen und mehrwertigen Alkoholen, vorzugsweise Diolen, mit 2 bis 12 Kohlenstoffatomen, vorzugsweise 2 bis 6 Kohlenstoffatomen hergestellt werden. Als Dicarbonsäuren kommen beispielsweise in Betracht: Bernsteinsäure, Glutarsäure, Adipinsäure, Korksäure, Azelainsäure, Sebacinsäure, Decandicarbonsäure, Maleinsäure, Fumarsäure und vorzugsweise Phthalsäure, Isophthalsäure, Terephthalsäure und die isomeren Naphthalindicarbonsäuren. Die Dicarbonsäuren können dabei sowohl einzeln als auch im Gemisch untereinander verwendet werden. Anstelle der freien Dicarbonsäuren können auch die entsprechenden Dicarbonsäurederivate, wie z.B. Dicarbonsäureester von Alkoholen mit 1 bis 4 Kohlenstoffatomen oder Dicarbonsäureanhydride eingesetzt werden. Beispiele für zwei- und mehrwertige Alkohole, insbesondere Diole sind: Ethandiol, Diethylenglykol, 1,2- bzw. 1,3-Propandiol, Dipropylenglykol, 1,4-Butandiol, 1,5-Pentandiol, 1,6-Hexandiol, 1,10-Decandiol, Glycerin und Trimethylolpropan. Eingesetzt werden können ferner Polyesterpolyole aus Lactonen, z.B. e-Caprolacton oder Hydroxycarbonsäuren, z.B. w-Hydroxycapronsäure und Hydroxybenzoesäuren.

Die Umsetzungsbedingungen von Carbonsäure und Alkohol werden üblicherweise so gewählt, dass die resultierenden Polyesterole (b-2) keine freien Säuregruppen aufweisen. Ferner weisen die resultierende Polyesterole (b-2) im allgemeinen ein Molekulargewicht von 500 bis 3000 g/mol, bevorzugt von mehr als 1000 g/mol bis 2500 g/mol auf. Üblicherweise weisen die resultierende Polyesterole (b-2) im allgemeinen eine tatsächliche Funktionalität von 1,9 bis 2,5, bevorzugt von 2,0 bis 2,2, insbesondere von 2,0 auf.

Der Polyesterolbestandteil (b-2) umfasst per Definition keine Polyesterole, die unter den Polyesterolbestandteil (b-1) fallen. Der Polyesterolbestandteil (b-1) umfasst alle Polyesterole, die durch Umsetzung von Dicarbonsäuren mit 1,4-Butandiol und 2-Methyl-1,3-Propandiol erhältich sind. Bevorzugt wird als Dicarbonsäure für die Herstellung des Polyesterols (b-1) Adipinsäure verwendet.

Die Umsetzungsbedingungen von Carbonsäure und Alkohol werden üblicherweise so gewählt, dass die resultierenden Polyesterole (b-1) keine freien Säuregruppen aufweisen Ferner weisen die resultierende Polyesterole (b-1) im allgemeinen ein Molekulargewicht von 1000 bis 3000 g/mol, bevorzugt von mehr als 1500 g/mol bis 2500 g/mol auf. Üblicherweise weisen die resultierende Polyesterole (b-1) im allgemeinen eine tatsächliche Funktionalität von 1,9 bis 2,2, bevorzugt von 2,0 auf.

Zur Herstellung der Polyesterpolyole (b) können die Mischungen aus Säuren und Alkoholen katalysatorfrei oder vorzugsweise in Gegenwart von Veresterungskatalysatoren, zweckmäßigerweise in einer Atmosphäre aus Inertgasen, wie z.B. Stickstoff, Kohlenmonoxid, Helium, Argon polykondensiert werden. Die Polykondensation kann bei Temperaturen von 150 bis 250°C, vorzugsweise 180 bis 220°C gegebenenfalls unter vermindertem Druck, erfolgen. Die Polykondensation wird üblicherweise bis zu einer gewünschten Säurezahl, die vorteilhafterweise kleiner als 10, vorzugsweise kleiner als 2 ist, fortgeführt. Zur Herstellung der Polyesterpolyole (b) werden Säuren und Alkohole üblicherweise im Molverhältnis von 1:1 bis 1,8, vorzugsweise 1:1,05 bis 1,2 polykondensiert.

Als Komponente (c) werden optional Kettenverlängerungsmittel eingesetzt. Geeignete Kettenverlängerungsmittel sind im Stand der Technik bekannt. Bevorzugt werden 2- und 3-funktionelle Alkohole mit Molekulargewichten unter 400 g/mol, insbesondere im Bereich von 60 bis 150 g/mol, verwendet. Beispiele sind Ethylenglykol, Propylenglykol, Diethylenglykol, Butandiol-1,4, Glycerin oder Trimethylolpropan. Bevorzugt wird Monoethylenglykol verwendet.

Das Kettenverlängerungsmittel wird üblicherweise in einer Menge von 1 bis 10 Gew.-%, bevorzugt von 2 bis 8 Gew.-%, besonders bevorzugt von 3 bis weniger als 5 Gew.-%, bezogen auf das Gesamtgewicht der Komponenten (b) und (c) verwendet.

Die Umsetzung der Komponenten (a) und (b) erfolgt gegebenenfalls in Gegenwart von Treibmitteln (d). Als Treibmittel können allgemein bekannte chemisch oder physikalisch wirkende Verbindungen eingesetzt werden. Als chemisch wirkendes Treibmittel kann bevorzugt Wasser eingesetzt werden. Beispiele für physikalische Treibmittel sind inerte (cyclo)aliphatische Kohlenwasserstoffe mit 4 bis 8 Kohlenstoffatomen, die unter den Bedingungen der Polyurethanbildung verdampfen. Die Menge der eingesetzten Treibmittel richtet sich nach der angestrebten Dichte der Schaumstoffe. Es ist bevorzugt, dass Wasser als alleiniges Treibmittel eingesetzt wird.

Als Katalysatoren für die Herstellung der erfindungsgemäßen Polyurethanschaumstoffe werden optional die üblichen und bekannten Polyurethanbildungskatalysatoren eingesetzt, beispielsweise organische Zinnverbindungen, wie Zinndiacetat, Zinndioctoat, Dibutylzinndilaurat, und/oder stark basische Amine wie Diazabicyclooctan, Triethylamin, oder vorzugsweise Triethylendiamin oder Bis(N,N-Dimethylaminoethyl)ether. Die Katalysatoren werden vorzugsweise in einer Menge von 0,01 bis 5 Gew.-%, vorzugsweise 0,1 bis 4 Gew.-%, bezogen auf das Gesamtgewicht der Komponenten (b) und (c), eingesetzt.

Die Umsetzung der Komponenten (a) und (b) erfolgt gegebenenfalls in Anwesenheit von Hilfs- und/oder Zusatzstoffen, wie z.B. Zellreglern, Trennmitteln, Pigmenten, Verstärkungsstoffen wie Glasfasern, oberflächenaktiven Verbindungen und/oder Stabilisatoren gegen oxidativen, thermischen, hydrolytischen oder mikrobiellen Abbau oder Alterung.

Im allgemeinen wird die Komponente (a) als Isocyanatkomponente und die Komponente (b), im Gemisch mit der Komponenten (c) und gegebenenfalls Treibmitteln und Zusatzstoffen als Polyolkomponente bezeichnet.

Gegenstand der Erfindung ist ferner ein Verfahren zur Herstellung einer Polyurethanschuhsohle, durch Umsetzung von
(a) Diphenylmethandiisocyanat mit
(b-1) einem Polyesterol, wobei das Polyesterol erhältlich ist durch Umsetzung von Adipinsäure mit 1,4-Butandiol und 2-Methyl-1,3-Propandiol,
(b-2) gegebenbenfalls weiteren Polyesterolen,
(c) gegebenenfalls Kettenverlängerungsmittel und
(d) Treibmittel
in einer Form.

Die oben beschriebenen bevorzugten Ausführungsformen für den erfindungsgemäßen Polyurethanintegralschaumstoff beziehen sich ebenso auf das erfindungsgemäße Verfahren.

Das erfindungsgemäße Verfahren wird bevorzugt in Formen unter Verdichtung durchgeführt. Die Formen bestehen bevorzugt aus Metall, z.B. Stahl oder Alumium, oder auch aus Kunstoff, z.B. Epoxyharz. Die Ausgangskomponenten werden bei Temperaturen von 15 bis 90°C, vorzugsweise bei 20 bis 35°C gemischt, und gegebenenfalls unter erhöhtem Druck, in das (bevorzugt geschlossene) Formwerkzeug eingebracht. Die Vermischung kann beim Einbringen durch im Stand der Technik bekannte Hoch- oder Niederdruckmischköpfe erfolgen. Die Temperatur der Form beträgt im allgemeinen zwischen 20 und 90°C, bevorzugt zwischen 30 und 60°C.

Die Menge des in die Form eingebrachten Reaktionsgemisches wird so bemessen, das die erhaltenen Formkörper eine Dichte von 250 bis 600 g/l oder von 800 bis 1200 g/l, bevorzugt von 400 bis 600 g/l oder von 820 bis 1050 g/l, aufweisen. Die Verdichtungsgrade der resultierenden Integralschaumstoffe, d.h. der Formkörper mit verdichteter Randzone und zelligem Kern, liegen zwischen 1,1 und 8,5, bevorzugt zwischen 1,5 und 7, besonders bevorzugt zwischen 2 und 6.

Zur Herstellung von Polyurethanschaumstoffen werden im allgemeinen die Komponenten (a) und (b) in solchen Mengen zur Umsetzung gebracht, dass das Äquivalenzverhältnis von NCO-Gruppen zur Summe der reaktiven Wasserstoffatome 1:0,8 bis 1:1,25, vorzugsweise 1:0,9 bis 1:1,15 beträgt. Ein Verhältnis von 1:1 entspricht hierbei einem NCO-Index von 100.

In einer bevorzugten Ausführungsform handelt es sich bei der erfindungsgemäßen Polyurethanschuhsohle um eine Außenschuhsohle. Diese weist im allgemeinen eine Dichte von 400 bis 800 g/l, bevorzugt von 550 bis 650 g/l auf. Unter Dichte des Polyurethanschaumstoffs ist im Rahmen dieser Erfindung die gemittelte Dichte über den gesamten resultierenden Schaumstoff zu verstehen, d.h. bei Integralschaumstoffen bezieht sich diese Angabe auf die mittlere Dichte des gesamten Schaumstoffs inklusive Kern und Außenschicht. Die Integralschaumstoffe werden bevorzugt wie vorstehend beschrieben in einer Form hergestellt, daher spricht man bei der Dichte des resultierenden Schaumstoffs auch von Formteildichte.

In einer weiteren bevorzugten Ausführungsform handelt es sich bei der erfindungsgemäßen Polyurethanschuhsohle um eine Zwischensohle. Diese weist im allgemeinen eine Dichte von 250 bis 600 g/l, bevorzugt von 350 bis 450 g/l auf.

In einer weiteren bevorzugten Ausführungsform handelt es sich bei der erfindungsgemäßen Polyurethanschuhsohle um eine Formsohle, wobei unter Formsohle eine Schuhsohle zu verstehen ist, die die Funktion von Außensohle und Zwischensohle in einer einzigen Sohle verwirklicht. Diese weist im allgemeinen eine Dichte von 300 bis 650 g/l, bevorzugt von mehr als 450 g/l bis weniger als 550 g/l auf.

Die erfindungsgemäßen Schuhsohlen weisen vorteilhafte Eigenschaften, insbesondere eine geringe Veränderung in der Härte und in der Zugfestigkeit auf.

Gegenstand der Erfindung ist somit die Verwendung von 2-Methyl-1,3-Propandiol zur Herstellung von Schuhsohlen. In einer bevorzugten Ausführungsform wird 2-Methyl-1,3-Propandiol in Form eines Polyesterols zusammen mit Adipinsäure und 1,4-Butandiol zur Herstellung von Schuhsohlen verwendet.

Die Erfindung soll durch nachstehende Beispiele veranschaulicht werden.

### Beispiele:

Es wird in den Beispielen 1, 2 und 3 ein erfindungsgemäßes Polyurethansystem zu einer Formsohle, Außensohle beziehungsweise Mittelsohle verschäumt.

Es wird in den Vergleichsbeispielen V1 und V2 ein Polyurethansystem, welche nicht die erfindungswesentlichen Polyesterole (b-1) enthalten, zu einer Außensohle beziehungsweise Mittelsohle verschäumt.

Die physikalischen Werte der resultierenden Schuhsohlen sind in Tabelle 1 widergegeben.

Folgende Systeme werden verwendet:
Erfindungsgemäßes System:
   A-Komponente:
      93 Teile Polyesterol Adipinsäure, 1,4-Butandiol und 2-Methy-1,3-Propandiol mit zahlenmittlerem Molekkulargewicht von etwa 2000 g/mol
      5 Teile Monoethylenglykol
      2 Teile Katalysator
      Wasser als Treibmittel (Menge richtet sich nach der zu erzielenden Dichte)
   B-Komponente:
      Prepolymer mit NCO-Gehalt von 20 %, auf Basis von 4,4'-MDI und Polyesterol mit OHZ von 60 und Funktionalität von 2
Vergleichssystem System:
   A-Komponente:
      93 Teile Polyesterol Adipinsäure, 1,4-Butandiol und Monoethylenglykol mit zahlenmittlerem Molekulargewicht von etwa 2000 g/mol
      5 Teile Monoethylenglykol
      2 Teile Katalysator
      Wasser als Treibmittel (Menge richtet sich nach der zu erzielenden Dichte)
   B-Komponente
      Wie erfindungsgemäßes System

Aus Tabelle 1 kann folgendes abgelesen werden:
Die erfindungsgemäßen Beispiele zeigen vorteilhafte Eigenschaften, insbesondere eine geringe Veränderung in der Härte und in der Zugfestigkeit auf (siehe Werte in den Zeilen "Delta ShoreA" und "Rückhaltung der Zugfestigkeit".
Hydrolysebedingungen: 70°C, 100 % relative Luftfeuchtigkeit, danach Trocknung bei 70°C, 24 Stunden und Konditionierung bei Raumtemperatur 24 Stunden.

**Tabelle 1:**

| | | **Beispiel 1** | | **Beispiel 2** | | **Beispiel 3** | | **V 1** | | **V 2** | |
|---|---|---|---|---|---|---|---|---|---|---|---|
| | | | | Außensohle | | | | Außensohle (Rubber- | | | |
| Art | | Formsohle | | (Rubber-like) | | Zwischensohle | | like) | | Formsohle | |
| Verformungsdichte (g/cc) | | 0,5 | | 0.62-0.63 | | 0,42 | | 0,62-0,63 | | 0,5 | |
| Index | | 98 | 100 | 98 | 100 | 98 | 100 | 98 | 100 | 98 | 100 |
| Härte ShA | | 50 | 51 | 37 | 39 | 33 | 35 | 38 | 40 | 46 | 49 |
| | nach 7 Tage Hydrolyse | 48 | 49 | 35 | 37 | 35 | 36 | 35 | 38 | 47 | 49 |
| | nach 14 Tage Hydrolyse | 46 | 47 | 33 | 35 | 36 | 37 | 32 | 35 | 42 | 46 |
| | nach 21 Tage Hydrolyse | 47 | 48 | 33 | 35 | 36 | 38 | 30 | 32 | 40 | 41 |
| Zugfestigkeit (N/mm²) | | 5,8 | 6,2 | 6,1 | 6,3 | 5 | 4,7 | 5,4 | 5,5 | 4,9 | 5,4 |
| | nach 7 Tage Hydrolyse | 6,1 | 6,4 | 6,1 | 6,8 | 4,9 | 4,8 | 6,1 | 6,4 | 5,6 | 6 |
| | nach 14 Tage Hydrolyse | 6,1 | 6,2 | 6,1 | 6,7 | 4,9 | 4,7 | 4,1 | 4,2 | 3,8 | 4,2 |
| | nach 21 Tage Hydrolyse | 5,8 | 6,3 | 6,1 | 6,5 | 5 | 4,7 | 2,1 | 1,8 | 1,7 | 1,4 |
| Reißdehnung (%) | | 401 | 389 | 577 | 467 | 371 | 332 | 580 | 540 | 421 | 403 |
| | nach 7 Tage Hydrolyse | 408 | 397 | 602 | 503 | 384 | 343 | 585 | 565 | 441 | 421 |
| | nach 14 Tage Hydrolyse | 431 | 425 | 643 | 555 | 391 | 363 | 540 | 530 | 432 | 438 |
| | nach 21 Tage Hydrolyse | 431 | 429 | 631 | 551 | 373 | 363 | 340 | 365 | 209 | 171 |
| Dauerbiegungen (30 kZyklen, | | | | | | | | | | | |
| mm) | | 2,3 | 2,3 | 2,1 | 2 | --- | --- | 2,1 | 2,1 | 2,1 | 2,4 |
| | nach 7 Tage Hydrolyse | 2 | 2,1 | 2,2 | 2 | --- | --- | 2,2 | 2,2 | 2,2 | 2 |
| | nach 14 Tage Hydrolyse | 2,1 | 2,1 | 2,1 | 2 | --- | --- | 15000 (*) | 8,2 | 12000 (*) | 7,2 |
| | nach 21 Tage Hydrolyse | 2,4 | 2,3 | 2,5 | 2 | --- | --- | 5000 (*) | 5000(*) | 1800 (*) | 1800 (*) |
| Weiterreißfestigkeit (N/mm) | | 6,1 | 5,8 | 6,6 | 5 | 4,5 | 4,6 | 4,5 | 4,6 | 5,9 | 5,6 |
| Delta ShA 7 Tage | | -2 | -2 | -2 | -2 | 2 | 1 | -3 | -2 | 1 | 0 |
| Delta ShA 14 Tage | | -4 | -4 | -4 | -4 | 3 | 2 | -6 | -5 | -4 | -3 |
| Delta ShA 21 tage | | -3 | -3 | -4 | -4 | 3 | 3 | -8 | -8 | -6 | -8 |
| Rückhaltung der Zugfestigkeit nach 7 Tage | | 105% | 103% | 100% | 108% | 98% | 102% | 113% | 116% | 114% | 111% |
| Rückhaltung der Zugfestigkeit nach 14 Tage | | 105% | 100% | 100% | 106% | 98% | 100% | 76% | 76% | 78% | 78% |
| Rückhaltung der Zugfestigkeit nach 21 Tage | | 100% | 102% | 100% | 103% | 100% | 100% | 39% | 33% | 35% | 26% |

| | | | | | | | | | | | |
|---|---|---|---|---|---|---|---|---|---|---|---|
| (*) gebrochen nach .... Zyklen | | | | | | | | | | | |

## Patentansprüche

1. Polyurethanschuhsohle, erhältlich durch Umsetzung von Diphenylmethandiisocyanat mit Polyesterolen, wobei die Polyesterole erhältlich sind durch Umsetzung von Dicarbonsäuren mit 1,4-Butandiol und 2-Methyl-1,3-Propandiol.

2. Polyurethanschuhsohle nach Anspruch 1, **dadurch gekennzeichnet, dass** es sich um eine Außensohle handelt.

3. Polyurethanschuhsohle nach Anspruch 1, **dadurch gekennzeichnet, dass** es sich um eine Zwischensohle handelt.

4. Polyurethanschuhsohle nach Anspruch 1, **dadurch gekennzeichnet, dass** es sich um eine Formsohle handelt.

5. Polyurethanschuhsohle nach einem der Ansprüche 1 bis 4, **dadurch gekennzeichnet, dass** das Diphenylmethandiisocyanat in Form von Diphenylmethandiisocyanatprepolymeren mit einen NCO-Gehalt von 10 bis 25 % verwendet wird.

6. Verfahren zur Herstellung einer Polyurethanschuhsohle, durch Umsetzung von
(a) Diphenylmethandiisocyanat mit
(b-1) einem Polyesterol, wobei das Polyesterol erhältlich ist durch Umsetzung von Adipinsäure mit 1,4-Butandiol und 2-Methyl-1,3-Propandiol,
(b-2) gegebenbenfalls weiteren Polyesterolen,
(c) gegebenenfalls Kettenverlängerungsmittel und
(d) Treibmittel
in einer Form.

## Claims

1. A polyurethane shoe sole, obtainable by reacting diphenylmethane diisocyanate with polyesterols, the polyesterols being obtainable by reacting dicarboxylic acids with 1,4-butanediol and 2-methyl-1,3-propanediol.

2. The polyurethane shoe sole according to claim 1, which is an outsole.

3. The polyurethane shoe sole according to claim 1, which is a middle sole.

4. The polyurethane shoe sole according to claim 1, which is a molded sole.

5. The polyurethane shoe sole according to any of claims 1 to 4, wherein the diphenylmethane diisocyanate is used in the form of diphenylmethane diisocyanate prepolymers having an NCO content of from 10 to 25%.

6. A process for the production of a polyurethane shoe sole by reacting
(a) diphenylmethane diisocyanate with
(b-1) a polyesterol, the polyesterol being obtainable by reacting adipic acid with 1,4-butanediol and 2-methyl-1,3-propanediol,
(b-2) if appropriate, further polyesterols,
(c) if appropriate, chain extenders and
(d) blowing agents
in a mold.

## Revendications

1. Semelles en polyuréthanne, pouvant être obtenues par réaction de diphénylméthanediisocyanate avec des polyesterols, où les polyesterols peuvent être obtenus par réaction d'acides dicarboxyliques avec le 1,4-butanediol et le 2-méthyl-1,3-propanediol.

2. Semelles en polyuréthanne selon la revendication 1, **caractérisées en ce qu'**il s'agit d'une semelle extérieure.

3. Semelles en polyuréthanne selon la revendication 1, **caractérisées en ce qu'**il s'agit d'une semelle intermédiaire.

4. Semelles en polyuréthanne selon la revendication 1, **caractérisées en ce qu'**il s'agit d'une semelle orthopédique.

5. Semelles en polyuréthanne selon l'une quelconque des revendications 1 à 4, **caractérisées en ce que** le diphénylméthanediisocyanate est utilisé sous forme d'un prépolymère de diphénylméthanediisocyanate ayant une teneur NCO allant de 10 à 25 %.

6. Procédé de préparation de semelles en polyuréthanne, par réaction de :
(a) le diphénylméthanediisocyanate, avec
(b-1) un polyesterol, où le polyesterol peut être obtenu par réaction d'acide adipique avec le 1,4-butanediol et le 2-méthyl-1,3-propanediol,
(b-2) le cas échéant, d'autres polyesterols,
(c) le cas échéant, un agent d'allongement de chaîne, et
(d) un agent porogène,
dans un moule.
